# EUROPÄISCHE PATENTSCHRIFT

(11) **EP 2 546 519 B1**
(45) Veröffentlichungstag und Bekanntmachung des Hinweises auf die Patenterteilung: **04.04.2018**
(21) Anmeldenummer: 12171797.9
(22) Anmeldetag: 13.06.2012
(51) Int. Cl.: F03D 80/10

(54) **Anordnung mit wenigstens einer Windenergieanlage**
Control with radar of airspace around wind turbines
Contrôle de l'espace aérien d'éoliennes avec radar

(30) Priorität: 12.07.2011 DE 202011050703 U
(43) Veröffentlichungstag der Anmeldung: 16.01.2013
(73) Patentinhaber: ENERTRAG Systemtechnik GmbH, 17291 Dauerthal (DE)
(72) Erfinder: Dipl.-Ing (FH) Herrholz, Thomas, 17099 Galenbeck (DE)
(74) Vertreter: Bittner, Thomas L.

(56) Entgegenhaltungen:
- WO-A1-2010/133541
- DE-U1-202004 006 595
- US-A- 4 746 924
- US-A1- 2008 088 508
- US-A1- 2009 034 259
- US-A1- 2010 194 603

## Beschreibung

Die Erfindung betrifft eine Anordnung mit wenigstens einer Windenergieanlage.

### Hintergrund der Erfindung

Windenergieanlagen werden genutzt, um im Rahmen der sogenannten alternativen Energieerzeugung aus der Windkraft elektrische Nutzenergie zu erzeugen. Aufgrund ihrer technischen Konstruktion stellen die Windenergieanlagen Hindernisse in der Landschaft dar, insbesondere für den Flugverkehr. Es wurde deshalb vorgeschlagen, Windenergieanlagen mit einem Radarsystem zu kombinieren, um mit dem Radarsystem den der Windenergieanlage zugeordneten Luftraum zu überwachen. Auf diese Weise werden mit Hilfe des Radarsystems Überwachungssignale erzeugt, die auf verschiedene Art und Weise ausgewertet und verarbeitet werden können, um insbesondere Kollisionen zwischen Flugobjekten einerseits und der Windenergieanlage andererseits zu verhindern. So kann vorgesehen sein, Informationen, die aus den Überwachungssignalen des Radarsystems abgeleitet sind, an das Flugobjekt oder eine Überwachungsstation zu übermitteln. Auch wurde vorgeschlagen, ein zur Hindernisbefeuerung vorgesehenes Kennzeichnungssystem der Windenergieanlage in Abhängigkeit von den mit dem Radarsystem erfassten Überwachungssignalen zu steuern.

So betrifft das Dokument DE 20 2004 006 595 U1 ein radargesteuertes Kennzeichnungssystem für Windenergieanlagen. Ausgehend von einer Luftraumüberwachung im Bereich der Windenergieanlage mittels eines Radarsystems wird das Kennzeichnungssystem aktiviert, so dass eine Lichtemission erfolgt.

Im Dokument DE 201 03 294 U1 ist weiterhin eine integrierte Rotor-Hindernisbefeuerungsanlage für Windenergieanlagen beschrieben. Auch das Dokument WO 03/104648 A1 beschreibt eine Windenergieanlage mit einer Hindernisbefeuerungseinrichtung, bei der in Rotorblattspitzen der Windkrafträder LED-Signallampen angeordnet sind.

Im Dokument EP 1 486 798 A2 ist ein Radarsystem beschrieben, mit dem der Luftraum um beliebige Objekte auf dem Erdboden herum überwacht werden kann, um eine Warnsignalisierung an den Objekten zu steuern. Das Radarsystem umfasst mehrere sogenannte Feldeinheiten die jeweils einen Ausschnitt des zu überwachenden Luftraums erfassen. Wird ein Flugobjekt, dessen Flugbahn hinsichtlich Höhe, Richtung und Geschwindigkeit potentiell zu einer Kollision mit den Objekten auf der Erde führt, erfasst, werden von dem Radarsystem Steuersignale abgegeben, um ein Kennzeichnungssystem an den Objekten zur Abgabe von optischen und / oder akustischen Warnsignalen zu aktivieren. Die Feldeinheiten sind eingerichtet, untereinander Informationen über erfasste Flugobjekte auszutauschen. Darüber hinaus sind sie in der Lage, Daten mit einer zentralen Steuereinrichtung auszutauschen. Auch eine Fernüberwachung und Ferndiagnose ist für die Feldeinheiten ermöglicht.

Das Dokument US 2010/0194603 A1 beschreibt eine Windenergieanlage mit einer Warnlichteinrichtung. Die Anlage umfasst einen Empfänger, welcher konfiguriert ist, ein vorbestimmtes Signal einer vorbestimmten Frequenz zu empfangen. In Auswertung des Signals wird die Warnlichteinrichtung gesteuert. Zur Erkennung von Flugzeugen kann in einer Ausführungsform ein Aktivradar vorgesehen sein.

Das Dokument US 2008/0088508 A1 beschreibt Technologien zum Erfassen von Flugzeugen. Es werden verschiedene Techniken wie Primärradar, Sekundärradar und Passivradar kombiniert.

### Zusammenfassung der Erfindung

Aufgabe der Erfindung ist es, eine verbesserte Anordnung mit wenigstens einer Windenergieanlage anzugeben, mit der möglichst unabhängig von konkreten Einsatz- und Umgebungsbedingungen der Windenergieanlage eine effiziente Luftraumüberwachung ermöglicht ist. Darüber hinaus soll eine flexible Verwendung für unterschiedliche Konfigurationen von Windenergieanlagen, sei es für eine einzelne Windenergieanlage oder eine Gruppe von Windenergieanlagen, unterstützt werden.

Diese Aufgabe wird erfindungsgemäß durch eine Anordnung mit wenigstens einer Windenergieanlage nach dem unabhängigen Anspruch 1 gelöst. Vorteilhafte Ausgestaltungen der Erfindung sind Gegenstand von abhängigen Unteransprüchen.

Die Erfindung umfasst den Gedanken einer Anordnung mit wenigstens einer Windenergieanlage, wobei ein Radarsystem vorgesehen ist, welches als ein Passivradarsystem mit einer Radardetektoreinrichtung ausgeführt und konfiguriert ist, einen der wenigstens einen Windenergieanlage zugeordneten Luftraum mittels Passivradar zu überwachen und überwachungsabhängig Überwachungssignale zu erzeugen.

Das der wenigstens einen Windenergieanlage zugeordnete Radarsystem ist als Passivradarsystem ausgeführt, also basierend auf einer Ortungstechnik, die im Gegensatz zum herkömmlichen Radar keine elektromagnetische Energie aussendet, um deren Reflexion zu analysieren. Stattdessen werden Reflexionen und der Dopplereffekt von Ausstrahlungen anderen Zwecken dienenden Sender ausgewertet, zum Beispiel reflektierte Wellen von Rundfunk- oder Mobilfunksendern. Das Passivradar zählt zu der bistatischen Radartechnologie, bei der die Strahlungsquellen nicht kooperativ sind. Im Unterschied dazu, nutzen bei monostatischen Radarsystemen Sender und Empfänger im Zeitmultiplexverfahren üblicherweise die gleiche Antenne.

Das vorgeschlagene Passivradarsystem hat unter anderem den Vorteil, dass hierbei die im zugeordneten Luftraum zu überwachenden Luftfahrzeuge nicht notwendiger Weise selbst mit einer Radarstrahlungsquelle ausgerüstet sein müssen. Vielmehr werden von dem Radarsystem in dem der wenigstens einen Windenergieanlage zugeordneten Luftraum reflektierte elektromagnetische Wellen erfasst, die von nichtradarbezogenen Strahlungsquellen ausgesendet wurden. Das Ortungsverfahren ist insoweit unabhängig von Radarstrahlungsquellen in den Luftfahrzeugen selbst. Auch sind Passivradarsysteme nur schwer ortbar, da sie selbst keine eigene Strahlung abgeben.

Die Radardetektoreinrichtung des Passivradarsystems ist gebildet mit einer Antenneneinrichtung zum Erfassen der Passivradarsignale, wobei ein oder mehrere Antennendetektoren vorgesehen sein können. Im Unterschied zum üblichen Radarverfahren, zum Beispiel dem Primär- oder dem Sekundärradar, wird beim Passivradar über die Antenneneinrichtung keine Strahlung ausgesendet.

Eine bevorzugte Weiterbildung der Erfindung sieht eine der wenigstens einen Windenergieanlage zugeordnete Kennzeichnungseinrichtung und eine Steuereinrichtung vor, die funktionell an die Kennzeichnungseinrichtung koppelt, derart, dass die Kennzeichnungseinrichtung zur Hindernisbefeuerung der Windenergieanlage steuerbar ist, nämlich in Abhängigkeit von den durch die Steuereinrichtung vom Radarsystem empfangenen Überwachungssignale vor. Die Kennzeichnungseinrichtung kann eingerichtet sein, eine Tag- und / oder eine Nachtkennzeichnung der wenigstens einen Windenergieanlage bereitzustellen. So können sich Tag- und Nachtkennzeichnung beispielsweise durch die Leuchtdichte von optischen Signaleinrichtungen unterscheiden. Die Kennzeichnungseinrichtung kann grundsätzlich optische und / oder akustische Kennzeichnungselemente umfassen. Wird mit dem Passivradarsystem ein Objekt im überwachten Luftraum erfasst, werden entsprechende Überwachungssignale von dem Radarsystem erzeugt und an die Steuereinrichtung übermittelt, worauf diese hiervon abgeleitete Steuersignale an die Kennzeichnungseinrichtung überträgt. Beispielsweise bedeutet dieses, dass hierauf optische Kennzeichnungselemente aktiviert werden. Diese Aktivierung wird dann beispielsweise erst wieder beendet, wenn das radarseitig erfasste Flugobjekt den überwachten Luftraum wieder verlassen hat.

Es ist vorgesehen, dass eine oder mehrere der wenigstens einen Windenergieanlage zugeordnete Strahlungsquellen gebildet sind, die konfiguriert sind, in den der wenigstens einen Windenergieanlage zugeordneten Luftraum Sendeenergie abzustrahlen, die von der Radardetektoreinrichtung des Passivradarsystems als von Hindernissen zurückgeworfene Energie detektierbar ist. Bei dieser Ausgestaltung ist vorgesehen, zusätzlich oder alternativ zu bestehenden natürlichen Strahlungsquellen künstliche Strahlungsquellen der wenigstens einen Winderlergieanlage zuzuordnen. Natürliche Strahlungsquellen können zum Beispiel Rundfunk- oder Mobilfunksender sein. Alternativ oder ergänzend hierzu ist nun vorgesehen, künstliche Strahlungsquellen im Bereich der wenigstens einen Windenergieanlage anzuordnen, so dass die Luftraumüberwachung mit dem Passivradarsystem auch für Windenergieanlagen sichergestellt werden kann, die an einem Ort aufgebaut werden, wo natürliche Strahlungsquellen gar nicht oder nicht mit ausreichender Signalstärke zur Verfügung stehen. So werden Windenergieanlagen beispielsweise häufig in dünn besiedelten Gebieten aufgebaut, wo unter Umständen Strahlungsenergie von zum Beispiel Mobilfunk- oder Rundfunkstrahlungsquellen nicht in ausreichender Stärke vorhanden ist, so dass sie nach dem Reflektieren und / oder Streuen an Luftfahrzeugen im überwachten Luftraum dann mittels des Passivradars detektierbar ist. Mittels der künstlichen Strahlungsquellen ist die Kollisionssicherung für die Windenergieanlage unabhängig von natürlichen Strahlungsquellen ausführbar. Hierbei sind die künstlichen Strahlungsquellen vorzugsweise vollständig entkoppelt von der Radardetektoreinrichtung, was bedeutet, dass - wie für das Passivradar üblich - nicht nur die Abstrahlung der Sendeenergie losgelöst von der Radardetektoreinrichtung erfolgt, sondern auch keine datentechnische Kopplung hierzu besteht, weshalb im Radarsystem keine Informationen für zum Beispiel eine Laufzeitauswertung von empfangenen Signalen zur Verfügung stehen. Auf diese Weise ist eine einfache und kostengünstige Umsetzung ermöglicht. Insbesondere in dieser Ausgestaltung sind die künstlichen Strahlungsquellen insoweit getrennt vom Radarsystem gebildet.

Eine vorteilhafte Ausführungsform der Erfindung sieht vor, dass zumindest eine Strahlungsquelle an der wenigstens einen Windenergieanlage angeordnet ist. Beispielsweise kann die Strahlungsquelle am Mast der Energieanlage montiert sein. Vergleichbar kann ein Detektorelement der Radardetektoreinrichtung, also insbesondere eine Antenne, am Mast der Windenergieanlage angebracht sein.

Bevorzugt sieht eine Fortbildung der Erfindung vor, dass zumindest eine Strahlungsquelle getrennt von der wenigstens einen Windenergieanlage angeordnet ist. Es kann hierbei vorgesehen sein, die Strahlungsquelle am Erdboden oder erhöht hier gegenüber anzubringen. Beispielsweise kann ein separater Ständer oder ein getrennter Mast vorgesehen sein, um die Strahlungsquelle erhöht gegenüber dem Erdboden zu positionieren. In ähnlicher Weise kann ein Detektorelement der Radardetektoreinrichtung im Bereich der wenigstens einen Windenergieanlage montiert werden.

Bei einer vorteilhaften Ausgestaltung der Erfindung kann vorgesehen sein, dass ein Windenergieanlagenpark mit mehreren Windenergieanlagen gebildet ist und Strahlungsquellen entlang eines umlaufenden Randbereiches des Windenergieanlagenparks angeordnet sind. Alternativ und / oder ergänzend können Strahlungsquellen und / oder Radardetektorelemente im Bereich zwischen den Windenergieanlagen angeordnet sein. Auch können Detektorelemente der Radardetektoreinrichtung entlang des umlaufenden Randbereiches des Windenergieanlagenparks angeordnet werden. Es kann vorgesehen sein, die Strahlungsquellen und / oder die Radardetektorelemente, bei denen es sich beispielsweise um Radarantennen handelt, an randständigen Windenergieanlagen zu montieren, zum Beispiel am Mast einer randseitigen Windenergieanlage. Aber auch eine von der Windenergieanlage getrennte Anordnung kann vorgesehen sein.

Eine Weiterbildung der Erfindung kann vorsehen, dass die eine oder die mehreren Strahlungsquellen als Nutzsignal freie Strahlungsquellen ausgeführt sind. Bei dieser Ausgestaltung dient die abgesendete Strahlungsenergie ausschließlich der Überwachung des Luftraums. Sie soll also von Luftfahrzeugen zurückgeworfen werden, die in den der wenigstens einen Windenergieanlage zugeordneten Luftraum eintreten.

Eine bevorzugte Weiterbildung der Erfindung sieht vor, dass die eine oder die mehreren Strahlungsquellen als Nutzsignal-Strahlungsquellen ausgeführt sind. Bei dieser Ausführungsform sind die von den Strahlungsquellen abgesendeten elektromagnetischen Wellen insbesondere Träger von Informationen, seien es zum Beispiel Rundfunk- oder Mobilfunksignale.

Neben der Luftraumüberwachung dienen die zusammen mit der wenigstens einen Windenergieanlage und dieser zugeordnet installierten Strahlungsquellen einer zusätzlichen Funktion, beispielsweise der Informationsübertragung. Eine zweckmäßige Ausgestaltung der Erfindung sieht vor, dass die eine oder die mehreren Strahlungsquellen konfiguriert sind, die Passivradarsignale unabhängig auch auszusenden, wenn Nutzsignale gerade nicht übertragen werden. Dies kann beispielsweise mittels Signalen in digitaler Form realisiert werden.

Bei einer zweckmäßigen Ausgestaltung der Erfindung kann vorgesehen sein, dass die eine oder die mehreren Strahlungsquellen als Nutzsignal-Strahlungsquelle eines der wenigstens einen Windenergieanlage zugeordneten Datenkommunikationssystems ausgeführt sind. Das der wenigstens einen Windenergieanlage zugeordnete Datenkommunikationssystem kann konfiguriert sein für einen Datenaustausch innerhalb der Anordnung von Windenergieanlagen, zum Beispiel zwischen einer zentralen Steuerung und lokalen Steuereinheiten in mehreren Windenergieanlagen und / oder zwischen Windenergieanlagen untereinander. Alternativ oder ergänzend kann das Datenkommunikationssystem, deren Strahlung auch zur Luftraumüberwachung mittels des Passivradars genutzt wird, einer Datenkommunikation mit Einrichtungen außerhalb der Anordnung mit der Windenergieanlage dienen, zum Beispiel mit einer entfernten Überwachungsstation.

Eine vorteilhafte Ausführungsform der Erfindung sieht vor, dass die eine oder die mehreren Strahlungsquellen als Hochfrequenz-Strahlungsquellen ausgeführt sind. Bevorzugt kommen Strahlungsquellen zum Einsatz, deren abgesendeten Signale hinsichtlich der Frequenz außerhalb des menschlichen Hörspektrums liegen. Es kann eine Abgabe von Strahlungsenergie im sogenannten ISM-Band vorgesehen sein. Als ISM-Bänder werden Frequenzbereiche bezeichnet, die durch Hochfrequenz-Geräte in Industrie, Wissenschaft, Medizin, in häuslichen und ähnlichen Bereichen genutzt werden. Die ISM-Bänder sind durch die Internationale Fernmeldeunion, Sektor Radiokommunikation (ISTU-R) in den Regelungen 5.138 und 5.1.5 weitestgehend festgelegt. Verwendet werden können vorzugsweise Signale im Bereich UKW, DVB-T und / oder GSM. Auch WLAN oder Bluetooth können zur Anwendung kommen.

Es ist vorgesehen, dass die eine oder die mehreren Strahlungsquellen an eine Überwachungseinrichtung koppeln, die konfiguriert ist, die Funktionstüchtigkeit der einen oder der mehreren Strahlungsquellen zu überwachen. Die Überwachung
der einen oder der mehreren Strahlungsquellen erfolgt beispielsweise dadurch, dass in vorgegebenen Zeitabständen oder dauerhaft Aktivsignale von der Überwachungseinrichtung an die Strahlungsquellen übersandt werden und eine entsprechende Rückmeldung erwartet und ausgewertet wird. Wird hierbei zum Beispiel festgestellt, dass eine oder mehrere der Strahlungsquellen nicht in korrekter Weise arbeiten, kann vorgesehen sein, dass die Überwachungseinrichtung hierauf einen dauerhaften Aktivmodus für die Strahlungsquellen initiiert, so dass diese fortdauernd Strahlungsenergie in den zu überwachenden Luftraum abgeben. Der Aktivbetrieb wird wieder gestoppt, wenn alle überwachten Strahlungsquellen ordnungsgemäß arbeiten.

### Beschreibung bevorzugter Ausführungsbeispiele der Erfindung

Die Erfindung wird im Folgenden anhand von bevorzugten Ausführungsbeispielen unter Bezugnahme auf eine Figur näher erläutert.

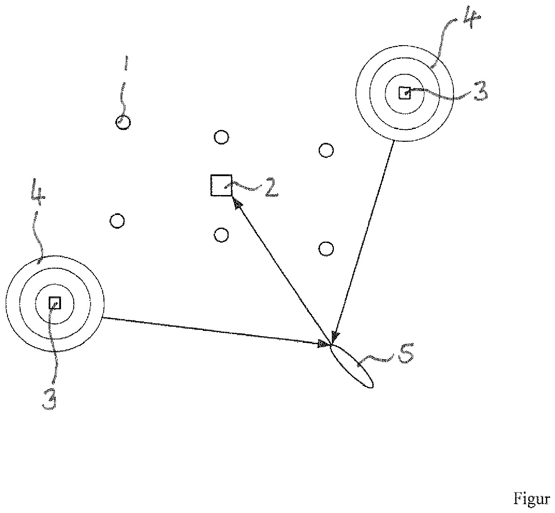

Die einzige Figur zeigt eine schematische Darstellung einer Anordnung mit mehreren Windenergieanlagen 1, die jeweils mit einem Kennzeichnungssystem zur Hindernisbefeuerung versehen sind. Mit Hilfe der mehreren Windenergieanlagen 1 ist ein Windenergieanlagenpark gebildet. Zwischen den mehreren Windenergieanlagen 1 ist ein Passivradardetektor 2 eines Passivradarsystems angeordnet. Den mehreren Windenergieanlagen 1 zugeordnet sind künstliche, aktiv betriebene Strahlungsquellen 3, die bei der dargestellten Ausführungsform außerhalb der mehreren Windenergieanlagen 1 angeordnet sind.

Im Betrieb senden nun die künstlichen Strahlungsquellen 3 elektromagnetische Wellen 4 aus in einen den mehreren Windenergieanlagen 1 zugeordneten Luftraum, so dass beim Eintritt eines Luftfahrzeuges 5 in diesen Luftraum die ausgesendeten elektromagnetischen Wellen hieran reflektiert werden. Zumindest Anteile der reflektierten Wellen werden von dem Passivradardetektor 2 erfasst, worauf von dem Passivradarsystem Überwachungssignale erzeugt werden, die anschließend von einer Steuereinrichtung (nicht dargestellt) ausgewertet werden. Bevorzugt werden dann in einer Ausgestaltung infolge der Auswertung der Überwachungssignale von der Steuereinrichtung Steuersignale erzeugt, um die Kennzeichnungseinrichtungen der Windenergieanlagen 1 anzusteuern, insbesondere zur Abgabe von optischen und / oder akustischen Signalen, zumindest so lange, wie sich das Luftfahrzeug 5 in dem überwachten Luftraum befindet.

Die in der vorstehenden Beschreibung, den Ansprüchen und der Figur offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Anordnung mit wenigstens einer Windenergieanlage (1) und einem Radarsystem (2),
**dadurch gekennzeichnet, dass**
- das Radarsystem (2) als ein Passivradarsystem mit einer Radardetektoreinrichtung ausgeführt und konfiguriert ist, einen der wenigstens einen Windenergieanlage (1) zugeordneten Luftraum mittels Passivradar zu überwachen und überwachungsabhängig Überwachungssignale zu erzeugen,
- eine oder mehrere der wenigstens einen Windenergieanlage (1) zugeordnete Strahlungsquellen (3) gebildet sind, die konfiguriert sind, in den der wenigstens einen Windenergieanlage (1) zugeordneten Luftraum Sendeenergie abzustrahlen, die von der Radardetektoreinrichtung des Passivradarsystems als von Hindernissen zurückgeworfene Energie detektierbar ist, und
- die eine oder die mehreren Strahlungsquellen (3) an eine Überwachungseinrichtung koppeln, die konfiguriert ist, die Funktionstüchtigkeit der einen oder der mehreren Strahlungsquellen (3) zu überwachen.

2. Anordnung nach Anspruch 1, **gekennzeichnet durch** eine der wenigstens einen Windenergieanlage (1) zugeordnete Kennzeichnungseinrichtung und eine Steuereinrichtung, die funktionell an die Kennzeichnungseinrichtung koppelt, derart, dass die Kennzeichnungseinrichtung zur Hindernisbefeuerung der Windenergieanlage (1) steuerbar ist, nämlich in Abhängigkeit von den **durch** die Steuereinrichtung vom Radarsystem (2) empfangenen Überwachungssignale.

3. Anordnung nach Anspruch 1 oder 2, **dadurch gekennzeichnet, dass** zumindest eine Strahlungsquelle (3) an der wenigstens einen Windenergieanlage (1) angeordnet ist.

4. Anordnung nach Anspruch 1 oder 2, **dadurch gekennzeichnet, dass** zumindest eine Strahlungsquelle (3) getrennt von der wenigstens einen Windenergieanlage (1) angeordnet ist.

5. Anordnung nach mindestens einem der vorangehenden Ansprüche, **dadurch gekennzeichnet, dass** ein Windenergieanlagenpark mit mehreren Windenergieanlagen (1) gebildet ist und Strahlungsquellen (3) entlang eines umlaufenden Randbereiches des Windenergieanlagenparks angeordnet sind.

6. Anordnung nach mindestens einem der vorangehenden Ansprüche, **dadurch gekennzeichnet, dass** die eine oder die mehreren Strahlungsquellen (3) als Nutzsignal freie Strahlungsquellen ausgeführt sind.

7. Anordnung nach mindestens einem der Ansprüche 1 bis 5, dadurch **gekennzeich**n e t, dass die eine oder die mehreren Strahlungsquellen (3) als Nutzsignal-Strahlungsquellen ausgeführt sind.

8. Anordnung nach Anspruch 7, **dadurch gekennzeichnet, dass** die eine oder die mehreren Strahlungsquellen (3) als Nutzsignal-Strahlungsquelle eines der wenigstens einen Windenergieanlage (1) zugeordneten Datenkommunikationssystems ausgeführt sind.

9. Anordnung nach mindestens einem der vorangehenden Ansprüche, **dadurch gekennzeichnet, dass** die eine oder die mehreren Strahlungsquellen (3) als Hochfrequenz-Strahlungsquellen ausgeführt sind.

10. Anordnung nach Anspruch 1, wobei eine oder die mehreren Strahlungsquellen (3) von dem Radarsystem (2) getrennt gebildet sind.

11. Anordnung nach Anspruch 1, wobei die Überwachungseinrichtung konfiguriert ist, in vorgegebenen Zeitabständen oder dauerhaft Aktivsignale an die eine oder die mehreren Strahlungsquellen (3) zu senden und eine Rückmeldung auszuwerten.

## Claims

1. An arrangement with at least one wind turbine (1) and a radar system (2),
**characterised in that**
- the radar system (2) is in the form of a passive radar system having a radar detector device and is configured to monitor an airspace associated with the at least one wind turbine (1) by means of passive radar and to generate monitoring signals depending on the monitoring,
- one or more radiation sources (3) associated with the at least one wind turbine (1) are formed, which are configured to emit emission energy into the airspace associated with the at least one wind turbine (1), said emission energy being detectable by the radar detector device of the passive radar system as energy reflected by obstacles, and
- the one or more radiation sources (3) are coupled to a monitoring device, which is configured to monitor the proper functioning of the one or more radiation sources (3).

2. The arrangement according to Claim 1,
**characterised by**
an indicating device, which is associated with the at least one wind turbine (1), and a control device, which is coupled functionally to the indicating device so as to control the indicating device for the obstruction lighting of the wind turbine (1), specifically depending on the monitoring signals received from the radar system (2) by the control device.

3. The arrangement according to Claim 1 or 2,
**characterised in that**
at least one radiation source (3) is arranged on the at least one wind turbine (1).

4. The arrangement according to Claim 1 or 2,
**characterised in that**
at least one radiation source (3) is arranged separately from the at least one wind turbine (1).

5. The arrangement according to at least one of the preceding claims,
**characterised in that**
a wind farm is formed with a plurality of wind turbines (1), and radiation sources (3) are arranged along a peripheral edge region of the wind farm.

6. The arrangement according to at least one of the preceding claims,
**characterised in that**
the one or more radiation sources (3) are in the form of useful-signal-free radiation sources.

7. The arrangement according to any one of Claims 1 to 5,
**characterised in that**
the one or more radiation sources (3) are in the form of useful signal radiation sources.

8. The arrangement according to Claim 7,
**characterised in that**
the one or more radiation sources (3) are in the form of the useful signal radiation source of a data communication system associated with the at least one wind turbine (1).

9. The arrangement according to at least one of the preceding claims,
**characterised in that**
the one or more radiation sources (3) are in the form of high-frequency radiation sources.

10. The arrangement according to Claim 1, wherein the one or more radiation sources (3) are formed separately from the radar system (2).

11. The arrangement according to Claim 1, wherein the monitoring device is configured to send active signals at predefined time intervals or continuously to the one or more radiation sources (3) and to evaluate a response.

## Revendications

1. Configuration avec au moins une éolienne (1) et un système de radar (2), **caractérisée en ce que**
- le système de radar (2) est réalisé sous la forme d'un système de radar passif avec un système détecteur de radar et configuré pour superviser au moyen d'un radar passif un espace aérien associé à l'au moins une éolienne (1) et à générer des signaux de supervision, en fonction de la supervision,
- une ou plusieurs sources de rayonnement (3) associées à l'au moins une éolienne (1) sont créées, qui sont configurées pour rayonner dans l'espace aérien associé à l'au moins une éolienne (1) de l'énergie émettrice qui est détectable par le système détecteur de radar du système de radar passif comme étant de l'énergie rejetée par des obstacles, et
- l'une ou les plusieurs sources de rayonnement (3) sont couplées sur un système de supervision qui est configuré pour superviser la fonctionnalité de l'une ou des plusieurs sources de rayonnement (3).

2. Configuration selon la revendication 1, **caractérisée par** un système de signalisation associé à l'au moins une éolienne (1) et par un système de commande, qui est fonctionnellement couplé sur le système de signalisation de telle sorte, que le système de signalisation puisse être commandé pour le balisage d'obstacles de l'éolienne (1), à savoir en fonction des signaux de supervision réceptionnés par le système de commande de la part du système de radar (2).

3. Configuration selon la revendication 1 ou 2, **caractérisée en ce qu'**au moins une source de rayonnement (3) est placée sur l'au moins une éolienne (1).

4. Configuration selon la revendication 1 ou 2, **caractérisée en ce que** l'au moins une source de rayonnement (3) est placée séparément de l'au moins une éolienne (1)

5. Configuration selon au moins l'une quelconque des revendications précédentes, **caractérisée en ce qu'**il est créé un parc d'éoliennes avec plusieurs éoliennes (1) et **en ce que** des sources de rayonnement (3) sont placées le long d'une zone de bordure périphérique du parc d'éoliennes.

6. Configuration selon au moins l'une quelconque des revendications précédentes, **caractérisée en ce que** l'une ou les plusieurs sources de rayonnement (3) sont réalisées sous la forme de sources de rayonnement exemptes de signal utile.

7. Configuration selon au moins l'une quelconque des revendications 1 à 5, **caractérisée en ce que** l'une ou les plusieurs ou sources de rayonnement (3) sont réalisées sous la forme de sources de rayonnement à signal utile.

8. Configuration selon la revendication 7, **caractérisée en ce que** l'une ou les plusieurs sources de rayonnement (3) sont réalisées sous la forme de sources de rayonnement à signal utile d'un système de communication de données associé à l'au moins une éolienne (1).

9. Configuration selon au moins l'une quelconque des revendications précédentes, **caractérisée en ce que** l'une ou les plusieurs sources de rayonnement (3) sont réalisées sous la forme de sources de rayonnement haute fréquence.

10. Configuration selon la revendication 1, une ou les plusieurs sources de rayonnement (3) étant créées séparément du système de radar (2).

11. Configuration selon la revendication 1, le système de supervision étant configuré pour envoyer dans des intervalles de temps prédéfinis ou en permanence des signaux actifs à l'une ou aux plusieurs sources de rayonnement (3) et pour évaluer un message en retour.
